# EUROPÄISCHE PATENTSCHRIFT

(11) **EP 2 045 110 B1**
(45) Veröffentlichungstag und Bekanntmachung des Hinweises auf die Patenterteilung: **21.07.2010**
(21) Anmeldenummer: 08016626.7
(22) Anmeldetag: 22.09.2008
(51) Int. Cl.: B60K 15/03, B60K 15/07, B60K 15/073

(54) **Kraftfahrzeug**
Motor vehicle
Véhicule automobile

(30) Priorität: 05.10.2007 DE 102007048096
(43) Veröffentlichungstag der Anmeldung: 08.04.2009
(73) Patentinhaber: Benteler Automobiltechnik GmbH, 33104 Paderborn (DE)
(72) Erfinder: Wibbeke, Michael, 33098 Paderborn (DE); Wille, Andreas, 33102 Paderborn (DE); Handing, Christian, 33449 Langenberg (DE)
(74) Vertreter: Griepenstroh, Jörg

(56) Entgegenhaltungen:
- EP-A- 1 493 961
- WO-A-92/06324
- WO-A-98/16403
- WO-A-98/46443
- WO-A-2007/107851
- BE-A- 442 554
- NL-A- 7 703 630

## Beschreibung

Die Erfindung betrifft ein Kraftfahrzeug mit den merkmalen im Oberbegriff des Patentanspruchs 1.

Mischungen aus Propangas und Butangas können bereits bei niedrigen Drücken verflüssigt werden. Diese Eigenschaft ist dafür verantwortlich, dass im Gegensatz zu Erdgas große Energiemengen auf kleinem Raum gespeichert werden können. Dieses Gasgemisch, das so genannte Autogas, wird auch als LPG (liquified petroleum gas) bezeichnet. Im Unterschied zu LPG wird das ebenfalls verwendbare Erdgas unter einem Druck von ca. 200 bar gasförmig gespeichert. Erdgas wird auch als CNG (compressed natural gas) bezeichnet. Die unterschiedlichen Speicherdrücke stellen auch unterschiedliche Anforderungen an die entsprechenden Tanks.

Generell werden zwei unterschiedliche Bauformen von Zusatztanks für die Speicherung von Druckgasen in Personenkraftwagen unterschieden. Zum einen gibt es den Reserveradmuldentank, welcher in einer vorhandenen Reserveradmulde verbaut wird, so dass keinerlei Laderaum verloren geht. Allerdings liegt der Reserveradmuldentank im Fassungsvermögen hinter den ebenfalls bekannten und verwendeten Zylindertanks. Zylindertanks können quer hinter der Sitzbank oder in Fahrtrichtung eingebaut werden. Hierdurch geht allerdings Laderaum verloren. Druckgastanks, die in der Radmulde eines Reserverads angeordnet werden, sind LPG-Tanks, die erheblich geringeren Drücken standhalten müssen als CNG-Tanks. CNG-Tanks werden daher in Zylinderform installiert.

Im Stand der Technik gibt es allerdings auch Lösungsvorschläge, wie CNG-Tanks, die in einer von der Zylinderform abweichenden Gestaltung konstruiert werden können. Beispielsweise wird in der BE 442 554 A ein kreisringförmiger Druckgastank beschrieben, der mit parallel zu seiner Rotationsachse verlaufenden Zugelementen versehen ist und einen kreisringförmigen Innenraum begrenzt. Im mittleren Bereich des Kreisrings sind entsprechende Ventilmittel angeordnet. Diese geometrische Form kommt auch bei LPG-Tanks zum Einsatz.

Als nachteilig wird angesehen, dass durch diese Bauform des Tanks der im Bereich einer Radmulde eines Reserverads vorhandene Bauraum nicht vollständig für das Tankvolumen ausgenutzt wird.

Durch die WO 2007/107851 zählt eine Weiterentwicklung eines Druckgastanks, insbesondere eines CNG-Tanks, zum Stand der Technik, bei welchem der Tank nicht torusförmig, sondern im Querschnitt kreiszylindrisch ausgebildet ist. Ringförmig angeordnete Zugelemente sind zur Aussteifung des Druckgastanks vorgesehen.

Es zählt durch die WO 92/06324, die den Oberbegriff des Anspruchs 1 bildet, zum Stand der Technik, Druckgasbehälter, welche eine größere radiale Erstreckung als axiale Erstreckung aufweisen, durch interne Verstärkungsmittel zwischen den gegenüberliegenden axialen Enden zu verstärken. Hierbei ist mindestens eine Verstärkungswand vorgesehen, die sich von dem einen axialen Ende zum anderen axialen Ende erstreckt. Die wenigstens eine Verstärkungswand kann konzentrisch zur Außenwand angeordnet sein. Es ist daher möglich, mehrere konzentrische Wände vorzusehen. Ebenso ist es denkbar, die Verstärkungswand spiralförmig mit sich erweiterndem Durchmesser auszugestalten. Zusätzlich zu der Verstärkungswand können separate stabförmige Zugmittel vorgesehen sein. Zwar ist durch eine oder mehrere konzentrisch angeordnete Wände die Möglichkeit einer sehr robusten Aussteifung gegeben, allerdings ist der Fertigungsaufwand zum Fügen der Verstärkungswände mit den axialen Enden des Druckgasbehälters relativ hoch.

Der Erfindung liegt daher die Aufgabe zu Grunde, ein Kraftfahrzeug mit einem Druckgastank aufzuzeigen, der in kreiszylindrischer Ausgestaltung in der Radmulde eines Reserverades angeordnet ist, wobei seine parallelen, zur Rotationsachse verlaufenden Zugelemente derart angeordnet sind, dass die durch die Innenwand aufgebrachten Zugspannungen mit einer geringen Zahl von Zugstäben möglichst gleichmäßig aufgenommen werden.

Diese Aufgabe ist bei einem Kraftfahrzeug mit den Merkmalen im Patentanspruch 1 gelöst.

Bei dem erfindungsgemäßen Kraftfahrzeug kommt ein in einer Radmulde eines Reserverads angeordneter Druckgastank zum Einsatz, der kreiszylindrisch ausgebildet ist und parallel zu seiner Rotationsachse verlaufende Zugelemente aufweist. Die Zugelemente verleihen dem Druckgastank die notwendige Formstabilität auch bei sehr hohen Drücken, insbesondere wenn es sich bei den Druckgastank um einen CNG-Tank handelt. Ein solcher Tank wird im Betrieb mit Drücken um 200 bar beaufschlagt. Der Druckgastank zeichnet sich dadurch aus, dass er kreiszylindrisch ausgebildet ist. Damit ist nicht nur die Außenkontur gemeint, die an die in der Regel kreisrunde Radmulde angepasst ist, sondern der von dem Druckgastank umschlossene Hohlraum. Es handelt sich nicht um einen Torus oder einen Ringraum, sondern tatsächlich um einen kreiszylindrischen Hohlkörper, dessen mittlerer, der Rotationsachse benachbarter Bereich im Unterschied zu donutförmigen oder torusförmigen Druckgastanks zur Speicherung von Gasen zur Verfügung steht und daher den im Bereich einer Radmulde zur Verfügung stehenden Bauraum wesentlich effektiver ausnutzt als donutförmige bzw. kreisringförmige Druckgastanks.

Der Berstdruck des Druckgastanks liegt vorzugsweise bei über 300 bar, insbesondere über 600 bar, wenn der Druckgastank z.B. mit Wasserstoff befüllt wird.

Der Druckgastank weist gerundete Randbereiche im Übergang zwischen seiner Zylindermantelfläche und seinen sich gegenüberliegenden Stirnseiten auf. Diese Kontur ist im Hinblick auf die hohen Innendrücke besonders günstig, da sich die Hülle des Druckgastanks im Kräftegleichgewicht quasi als Membran verhält. Die abgeflachte, kreiszylindrische Geometrie des Druckgastanks wird durch seine im Inneren angeordneten und parallel zu seiner Rotationsachse verlaufenden Zugelemente gewährleistet. Die Zugelemente haben die Funktion, die einander gegenüberliegenden Ober- und Unterseiten des Druckgastanks miteinander zu verbinden und die durch den Innendruck aufgebrachte Zugspannung aufzunehmen. Die Zugelemente können als Zugstab oder Zugseil ausgebildet sein. Sie verhindern, dass sich der Druckgastank unter der Last des Innendrucks in unerwünschter Weise ausbeult.

Die Zugelemente sind ringförmig angeordnet. Der Mittelpunkt der ringförmigen Anordnung sollte hierbei mit der Rotationsachse des kreiszylindrisch ausgebildeten Druckgastanks zusammenfallen. Auf Grund der kreiszylindrischen Form empfiehlt es sich, die Zugelemente gleichmäßig über den Umfang verteilt anzuordnen, so dass sich eine gleichmäßige Belastung und Spannungsverteilung ergibt.

Es sind mehrere Ringe von konzentrisch angeordneten Zugelementen vorgesehen, wobei die Zugelemente zweier benachbarter Ringe in Umfangsrichtung zueinander versetzt angeordnet sind. Auf diese Weise ergibt sich eine gleichmäßigere Spannungsverteilung in der Wandung des Druckgastanks.

Es wird als günstig angesehen, wenn ein Ring von Zugelementen zwischen 3 und 12 Zugelemente, insbesondere 6 Zugelemente, umfasst. Bei dieser Anzahl von Zugelementen ergibt sich eine gleich bleibende Spannungsverteilung innerhalb des Druckgastanks ohne signifikante Spannungsspitzen und ohne dass der Aufwand für die zusätzliche Einbringung von Zugelementen der wirtschaftlichen Fertigung eines Druckgastanks entgegensteht.

Zusätzlich zu den ringförmig angeordneten Zugelementen kann ein weiteres Zugelement im Bereich der Rotationsachse angeordnet sein. Durch dieses zentrale Zugelement können auch ringförmige Anordnungen mit größeren Durchmessern realisiert werden, ohne dass es in der Mitte des Druckgastanks zu einer übergroßen Materialbeanspruchung des Druckgastanks kommt.

Es wird als besonders vorteilhaft angesehen, wenn wenigstens eines der Zugelemente als Befüllungs- oder Entnahmekanal ausgebildet ist. Da die Zugelemente als Rohre ausgeführt sein können, kann ihr Innenraum zur Zu- oder Ableitung des Druckgases ausgenutzt werden, so dass keine weiteren Öffnungen in die Wandung des Druckgastanks eingebracht werden müssen.

Insbesondere, wenn der Innenraum des Druckgastanks mit einem Speichermedium für das Druckgas gefüllt ist, ist es von Vorteil, das Druckgas über mehrere Einspeisestellen in das Speichermedium einzubringen, um eine schnellere Befüllung und gleichmäßige Verteilung des Druckgases zu ermöglichen.

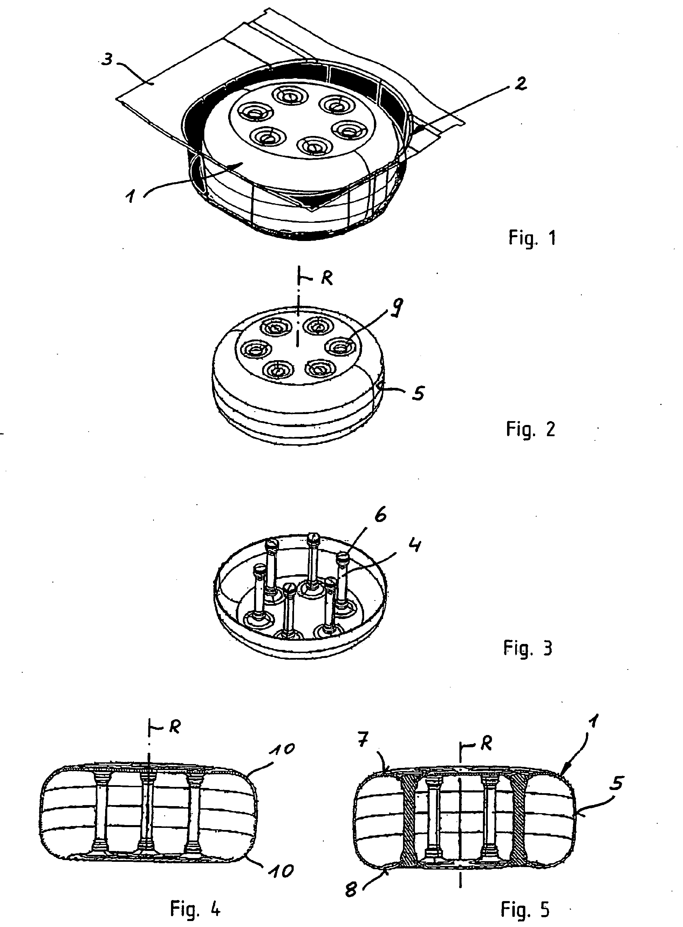

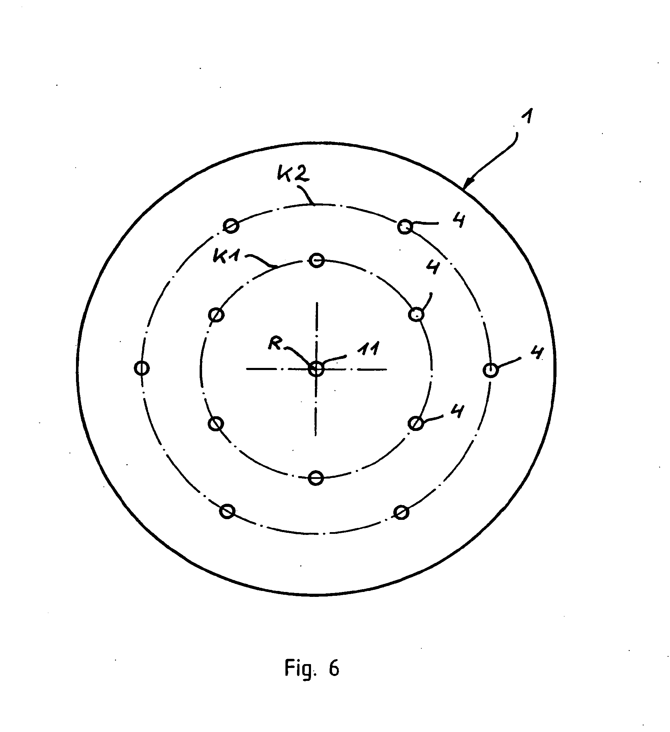

Die Erfindung wird nachfolgend anhand eines in der Figur 6 dargestellten Ausführungsbeispiels näher erläutert. Die Figuren 1 bis 5 dienen lediglich der Illustrierung der beanspruchten Erfindung und sind hinsichtlich der Anordnung der Zugelemente nicht Ausführungsformen der Erfindung, für die Schutz begehrt wird. Es zeigt:
- Figur 1: eine perspektivische Ansicht eines Druckgastanks in einer Radmulde;
- Figur 2: den Druckgastank der Figur 1 außerhalb der Radmulde;
- Figur 3: einen perspektivischen Einblick in den Druckgastank in Blickrichtung auf die Innenseite der Unterschale und die Zugelemente;
- Figur 4: einen Vertikalschnitt durch den Druckgastank der Figur 2;
- Figur 5: einen weiteren Vertikalschnitt durch den Druckgastank der Figur 2 und
- Figur 6: einen Horizontalschnitt durch einen Druckgastank in schematischer Darstellung.

Figur 1 zeigt einen Druckgastank 1, welcher in der Radmulde 2 angeordnet ist. Anstelle des Druckgastanks 1 kann innerhalb der Radmulde 2 auch ein nicht näher dargestelltes Reserverad angeordnet sein. Die Radmulde 2 befindet sich in einem andeutungsweise dargestellten Ladeboden 3. Die Radmulde 2 ist normalerweise durch eine Abdeckung verschlossen, die auf dem Ladeboden 3 aufliegt.

Der Druckgastank 1 ist kreiszylindrisch ausgebildet, wie anhand der Figuren 2 und 3 deutlich wird. Das heißt, dass er bezüglich seines Außenumfangs kreisrund gestaltet ist, wobei seine Rotationsachse R in den dargestellten Abbildungen jeweils in Hochrichtung verläufe. Der Druckgastank 1 dient zur Aufnahme von Erdgas unter hohen Drücken und ist über Zugelemente 4, die innerhalb des Druckgastanks 1 angeordnet sind, zusätzlich verstärkt. Die Zugelemente 4 verlaufen parallel zu der Rotationsachse R. Alle Zugelemente 4 befinden sich im gleichen Abstand zur Rotationsachse R. Sie sind gleichzeitig über den Umfang verteilt angeordnet, so dass sich eine ringförmige Anordnung ergibt. Es sind bei diesem Ausführungsbeispiel sechs Zugelemente 4 vorgesehen. Die Zugelemente 4 befinden sich in einem Abstand von der Rotationsachse R, welcher dem Abstand zu einer Zylindermantelfläche 5 entspricht.

Wie anhand der Figuren 3 bis 5 deutlich wird, sind alle Zugelemente 4 identisch konfiguriert. In Figur 5 ist zu erkennen, dass die Zugelemente 4 als massive Zugstäbe ausgeführt sind. Die Zugelemente 4 weisen Ankerköpfe 6 auf, die in Öffnungen der sich gegenüberliegenden Stirnseiten 7, 8 des Druckgastanks 1 eingreifen und hier dicht mit den Stirnseiten 7, 8 verbunden sind. Die Zugelemente 4 ragen hierbei nicht über die Stirnseiten 7, 8 hinaus, da ihre Ankerköpfe 6 innerhalb von muldenförmigen Vertiefungen 9 liegen. Unter Vernachlässigung der Vertiefungen 9 ergibt sich dadurch ein im Wesentlichen kreiszylindrischer Körper. Allerdings sind die Randbereiche des Körpers bzw. des Druckgastanks, d.h. die Übergangsbereiche zwischen der Zylindermantelfläche 5 und den Stirnseiten 7, 8, gerundet. Die gerundeten Übergangsbereiche 10 erstrecken sich insgesamt etwa über 50 % der in Richtung der Rotationsachse R gemessenen Gesamthöhe des Druckgastanks 1. Dementsprechend macht der zylindermantelförmige Bereich ebenfalls 50 % der Gesamthöhe aus.

Der Druckgastank 1 wird vorzugsweise aus identisch gestalteten Ober- und Unterschalen hergestellt, die im Bereich der Zylindermantelfläche zusammenstoßen und dort miteinander verbunden werden. Der Druckgastank ist in nicht näher dargestellter Weise mit wenigstens einem Anschluss zum Beschicken und Entleeren versehen, der sowohl im Bereich der Zylindermantelfläche als auch im Bereich der Stirnseiten angeordnet sein kann.

Figur 6 zeigt einen Horizontalschnitt durch einen Druckgastank 1 in rein schematischer Darstellung. Es ist zu erkennen, dass zwei konzentrische Kreise K1, K2 mit jeweils sechs Zugelementen 4 vorhanden sind. Die gleichmäßig über den Umfang verteilten Zugelemente 4 sind hinsichtlich der Kreise K1, K2 in Umfangsrichtung zueinander versetzt angeordnet, d.h. die Zugelemente 4 des inneren Kreises K1 befinden sich bei 30°, 90°, 150°..., wohingegen die Zugelemente 4 des äußeren Kreises bei 0°, 60°, 120°..., also um 30° versetzt, angeordnet sind. Zusätzlich befindet sich ein weiteres Zugelement 11 in der Mitte des Druckgastanks 1, d.h. im Bereich der Rotationsachse R. Dieses Zugelement 11 dient gleichzeitig als Befüllungs- und Entnahmekanal. Es ist daher mit wenigstens einer in den Innenraum des Druckgastanks 1 mündenden Öffnung, einem Anschluss an der Außenseite des Druckgastanks und mit einem den Anschluss mit der Öffnung fluidleitend verbindenden Kanal versehen. In dieser Art und Weise können auch die weiteren Zugelemente 4 ausgestaltet sein, um eine rasche Befüllung und Entleerung des Druckgastanks zu ermöglichen.

**Bezugszeichen:**
- 1 -: Druckgastank
- 2 -: Radmulde
- 3-: Ladeboden
- 4 -: Zugelement
- 5 -: Zylindermantel
- 6 -: Ankerkopf
- 7 -: Stirnseite
- 8 -: Stirnseite
- 9 -: Vertiefung
- 10 -: Übergangsbereich
- 11 -: Zugelement

- K1 -: Kreis
- K2 -: Kreis
- R -: Rotationsachse

## Patentansprüche

1. Kraftfahrzeug mit einem Druckgastank (1), welcher in einer Radmulde (2) eines Reserverads angeordnet ist, wobei der Druckgastank (1) kreiszylindrisch ausgebildet ist und parallel zu seiner Rotationsachse (R) verlaufende Zugelemente (4) aufweist, wobei die Zugelemente (4) ringförmig angeordnet sind, **dadurch gekennzeichnet, dass** mehrere konzentrisch angeordnete Ringe von Zugelementen (4) vorgesehen sind, wobei die Zugelemente (4) zweier benachbarter Ringe in Umfangsrichtung zueinander versetzt angeordnet sind.

2. Kraftfahrzeug nach Anspruch 1, **dadurch gekennzeichnet, dass** der Druckgastank (1) ein CNG-Tank (CNG= compressed natural gas) ist.

3. Kraftfahrzeug nach Anspruch 1 oder 2, **dadurch gekennzeichnet, dass** der Berstdruck des Druckgastanks (1) größer als 300 bar ist.

4. Kraftfahrzeug nach Anspruch 3, **dadurch gekennzeichnet, dass** der Berstdruck des Druckgastanks (1) größer als 600 bar ist.

5. Kraftfahrzeug nach Anspruch 1, **dadurch gekennzeichnet, dass** die Zugelemente (4) gleichmäßig über den Umfang verteilt angeordnet sind.

6. Kraftfahrzeug nach Anspruch 1 oder 5, **dadurch gekennzeichnet, dass** ein Ring von Zugelementen (4) 3 bis 12 Zugelemente (4) umfasst.

7. Kraftfahrzeug nach einem der Ansprüche 1 bis 6, **dadurch gekennzeichnet, dass** ein Zugelement (11) im Bereich der Rotationsachse (R) angeordnet ist.

8. Kraftfahrzeug nach Anspruch 7, **dadurch gekennzeichnet, dass** wenigstens ein Zugelement (4) als Befüllungs- oder Entnahmekanal ausgebildet ist.

## Claims

1. Motor vehicle with a compressed-gas tank (1) arranged in a wheel well (2) of a spare wheel, said compressed-gas tank (1) being circular-cylindrical in shape, and having traction elements (4) running parallel to its axis of rotation (R), said traction elements (4) being arranged in a ring shape, **characterised in that** several concentrically arranged rings of traction elements (4) are provided, while the traction elements (4) of two adjacent rings are arranged offset from each other in the direction of the perimeter.

2. Motor vehicle according to claim 1, **characterised in that** the compressed-gas tank (1) is a compressed natural gas (CNG) tank.

3. Motor vehicle according to claim 1 or 2, **characterised in that** the bursting pressure of the compressed-gas tank (1) is greater than 300 bar.

4. Motor vehicle according to claim 3, **characterised in that** the bursting pressure of the compressed-gas tank (1) is greater than 600 bar.

5. Motor vehicle according to claim 1, **characterised in that** the traction elements (4) are arranged evenly distributed over the perimeter.

6. Motor vehicle according to claim 1 or 5, **characterised in that** a ring of traction elements (4) comprises 3 to 12 traction elements (4).

7. Motor vehicle according to one of claims 1 to 6, **characterised in that** one traction element (11) is arranged in an area of the axis of rotation (R).

8. Motor vehicle according to claim 7, **characterised in that** at least one of the traction elements (4) is configured to form a charging or discharging channel.

## Revendications

1. Véhicule automobile comprenant un réservoir à gaz sous pression (1), qui est agencé dans une cavité de roue (2) d'une roue de secours, le réservoir à gaz sous pression (1) étant réalisé sous forme cylindrique circulaire et comprenant des éléments de traction (4) qui s'étendent parallèlement à son axe de rotation (R), lesdits éléments de traction (4) étant agencés en forme d'anneau,
**caractérisé en ce qu'**il est prévu plusieurs anneaux concentriques d'éléments de traction (4), et les éléments de traction (4) de deux anneaux voisins sont agencés en décalage les uns par rapport aux autres en direction périphérique.

2. Véhicule automobile selon la revendication 1, **caractérisé en ce que** le réservoir à gaz sous pression (1) est un réservoir de gaz naturel comprimé.

3. Véhicule automobile selon la revendication 1 ou 2, **caractérisé en ce que** la pression d'éclatement du réservoir à gaz sous pression (1) est supérieure à 300 bars.

4. Véhicule automobile selon la revendication 3, **caractérisé en ce que** la pression d'éclatement du réservoir à gaz sous pression (1) est supérieure à 600 bars.

5. Véhicule automobile selon la revendication 1, **caractérisé en ce que** les éléments de traction (4) sont agencés en répartition régulière sur la périphérie.

6. Véhicule automobile selon la revendication 1 ou 5, **caractérisé en ce qu'**un anneau d'éléments de traction (4) comprend de 3 à 12 éléments de traction (4).

7. Véhicule automobile selon l'une des revendications 1 à 6, **caractérisé en ce qu'**un élément de traction (11) est agencé dans la région de l'axe de rotation (R).

8. Véhicule automobile selon la revendication 7, **caractérisé en ce qu'**au moins un élément de traction (4) et réalisé sous forme de canal de remplissage ou de prélèvement.
